# EUROPÄISCHE PATENTSCHRIFT

(11) **EP 0 434 906 B1**
(45) Veröffentlichungstag und Bekanntmachung des Hinweises auf die Patenterteilung: **22.02.1995**
(21) Anmeldenummer: 90117270.0
(22) Anmeldetag: 07.09.1990
(51) Int. Cl.: B60P 7/13

(54) **Transportsicherung für einen Behälter, wie Container, Mulde oder dergleichen, der mit einem auf dem Chassis eines Fahrzeuges angeordneten Wechselgerät aufnehmbar und absetzbar ist**
Securing during transport of a receptacle such as a container, trough or similar, which is detachable by means of an exchanging device arranged on the vehicle frame
Fixation pendant le transport d'un réceptacle, par exemple un conteneur, une benne ou similaire. Ce réceptacle est amovible au moyen d'un dispositif interchangeable disposé sur le châssis du véhicule

(30) Priorität: 23.12.1989 DE 3942935
(43) Veröffentlichungstag der Anmeldung: 03.07.1991
(73) Patentinhaber: Bock, Normann, D-28857 Syke (DE)
(72) Erfinder: Bock, Normann, W-2808 Syke (DE)
(74) Vertreter: Jabbusch, Wolfgang, Dr.Jur. Jabbusch, Wehser & Lauerwald Patentanwälte

(56) Entgegenhaltungen:
- FR-A- 1 543 515
- FR-A- 2 155 043
- FR-A- 2 155 043
- FR-A- 2 497 161
- PATENT ABSTRACTS OF JAPAN, Band 6, Nr. 86 (M-131)[964], 25. Mai 1982;& JP-A-57 22 931 (KYOKUTO KAIHATSU KOGYO) 06-02-1982

## Beschreibung

Die Erfindung betrifft eine Transportsicherung für einen Behälter, der mit einem auf dem Chassis eines Fahrzeugs angeordneten Wechselgerät mit Kippbrücke aufnehmbar und, in Transportlage auf dem Wechselgerät gehalten, transportierbar ist, wobei das Wechselgerät eine von druckmittelbeaufschlagtem Arbeitszylinder betätigbare Hubeinrichtung zur Veränderung des Anstellwinkels der Kippbrücke hat und wobei in der Transportlage des Behälters gegenseitig in Formschlußeingriff stehende Sicherungselemente gegen eine Verschiebung des Behälters aus seiner Transportlage vorgesehen sind. Eine solche Transportsicherung ist nach der FR-A- 2 155 043 bekannt.

Bekannte Transportsicherungen, die einen Wechselbehälter gegen Verrutschen und Kippen durch entsprechende Verriegelungseinrichtungen sichern, haben den Nachteil, daß sie auf die Verwendung in Verbindung mit einem Wechselgerät speziell angepaßt sind. Ein Wechselgerät ist auf dem Chassis eines Fahrzeuges installiert. Ein z.B. auf dem Erdboden hinter dem Fahrzeug stehender Behälter kann vom Wechselgerät aufgenommen werden und in eine für den Transport vorgesehene Endlage, die Transportlage, bewegt werden. Die Transportsicherungen umfassen am Wechselgerät angeordnete Sicherungselemente, die in entsprechende am Behälter angeordnete Teile eingreifen, sobald der Behälter seine Transportlage eingenommen hat. Da das Wechselgerät mit dem Chassis des Fahrzeuges verbunden ist, also mit dem Fahrzeug praktisch eine Einheit bildet, ist der an dem Wechselgerät gesicherte Behälter auch praktisch am Fahrzeug gesichert.

Wechselgeräte weisen normalerweise eine Kippbrücke auf, die mittels eines Arbeitszylinders in einen vorbestimmten Anstellwinkel zur Längsachse des Fahrzeugs bringbar ist. An der Kippbrücke ist ein Schubrahmen geführt, an dem eine Aufnahmeeinrichtung, beispielsweise ein Hakenarm, angeordnet ist. Der Haken des Hakenarmes kann in einen entsprechenden Beschlag des Behälters eingreifen, und durch Betätigung des Schubrahmens ist der Behälter entlang der Kippbrücke und damit entlang des Wechselgerätes verschiebbar. Mit dem am Schubrahmen der Kippbrücke angeordneten Hakenarm wird der Behälter somit auch in seine Transportlage bewegt, bis die vorgesehenen Transportsicherungen in gegenseitigen Eingriff gebracht sind.

Die Anordnung hat somit auch noch den Nachteil, daß durch unbeabsichtigtes Betätigen eines Arbeitszylinders zur Veränderung des Anstellwinkels der Kippbrücke, weiterhin ein Ankippen des Behälters gegenüber dem Fahrzeug möglich ist, wobei die Transportsicherungen in Eingriff stehen, weil der Behälter sich in der Transportlage befindet.

Der Erfindung liegt die Aufgabe zugrunde, eine Transportsicherung dahingehend zu verbessern, daß ein Ankippen des in Transportstellung befindlichen Behälters nicht mehr möglich ist.

Diese Aufgabe ist erfindungsgemäß dadurch gelöst, daß am Chassis wenigstens ein Sicherungsorgan angeordnet ist, daß der Behälter wenigstens einen Vorsprung aufweist, daß jeder Vorsprung das zugeordnete Sicherungsorgan in der Transportlage des Behälters formschlüssig untergreift und daß ein in der Transportlage des Behälters betätigter Endschalter vorgesehen ist, der mit einem den Arbeitszylinder der Hubeinrichtung außer Betrieb setzenden Schaltorgan in Wirkverbindung steht.

Das am Chassis vorgesehene Sicherungsorgan, das von dem Vorsprung am Behälter dann untergriffen wird, wenn sich der Behälter auf dem Fahrzeug in Transportlage befindet, bewirkt, daß der Behälter nicht mehr mit dem Wechselgerät sondern direkt mit dem Fahrzeug verbunden ist. Das am Chassis befindliche Sicherungsorgan sichert also den Behälter in seiner Transportlage nicht nur gegen Abheben vom Wechselgerät, wie es bei bisherigen Transportsicherungen der Fall war, sondern in vorteilhafter Weise auch gegen ein Abheben vom Fahrzeug.

Da ein Ankippen der Kippbühne des Wechselgerätes bewirkende Arbeitszylinder der Hubeinrichtung nach wie vor bei entsprechender versehentlicher Betätigung ausgefahren werden können, wobei ein Arbeitszylinder dann, wenn sich der Behälter in Transportlage befindet, gegen die Haltekraft von Sicherungsorgan und Vorsprung arbeitet, würde eine Überlastung dieser Bauteile auftreten. Sowohl der Arbeitszylinder mit seinen Abstützungen, als auch Sicherungsorgan und Vorsprung am Behälter könnten dabei brechen. Um dies zu vermeiden ist der erfindungsgemäß angeordnete, in der Transportstellung des Behälters betätigte Endschalter vorgesehen. Hat der Behälter seine Transportlage erreicht, wobei das Sicherungsorgan vom Vorsprung am Behälter untergriffen wird, setzt der Endschalter den Arbeitszylinder der Hubeinrichtung außer Betrieb. Dadurch ist gewährleistet, daß der Arbeitszylinder nicht mehr ausfahren kann, sobald der Behälter seine Transportlage auf dem Fahrzeug eingenommen hat.

Über den Schubrahmen kann der Behälter auch jederzeit aus seiner Transportlage gebracht werden, wobei bereits ein geringer Verschiebeweg des aufgenommenen Behälters auf dem Wechselgerät ausreicht, um Sicherungsorgan und Vorsprung am Behälter wieder außer Eingriff zu bringen. Der Endschalter ist dabei mit Vorteil so angeordnet, daß bei Erreichen einer derartigen Lage des Behälters die Betätigung des Arbeitszylinders wieder freigegeben ist. Ein Anheben des Behälters, beispielsweise durch Ankippen der Kippbühne des Wechselgerätes, ist dann jederzeit möglich. Auch kann ein Behälter mit einem anderen Hebezeug, beispielsweise einem Kran, dann von dem Wechselgerät bzw. dem Fahrzeug abgehoben werden.

Die erfindungsgemäße Transportsicherung ist damit auch nicht auf die Anwendung bei solchen Behältern beschränkt, die nur mit einem daran angepaßten Wechselgerät gehandhabt werden können.

Selbstverständlich können am Chassis des Fahrzeuges mehrere Sicherungsorgane angeordnet sein. Desgleichen können auch am Behälter mehrere Vorsprünge vorhanden sein. Zweckmäßigerweise wird an jeder Längsseite des Fahrzeuges, beidseitig eines auf seinem Chassis angeordneten Wechselgerätes, ein Sicherungsorgan angeordnet, wobei sich entsprechend in den Seitenbereichen der Behälter zugeordnete Vorsprünge befinden.

Es ist jedoch auch möglich, ein z.B. in der Mitte des Fahrzeugchassis angeordnetes Sicherungsorgan vorzusehen, dem dann ein entsprechend an der Unterseite des Behälters befindlicher Vorsprung zugeordnet ist.

Jedes Sicherungsorgan ist als eine vom Chassis nach oben abstehende und zum Fahrzeugheck hin weisende hakenförmige Greifnase ausgebildet.

Diese Maßnahme hat den Vorteil, daß ein vom Wechselgerät in an sich bekannter Weise über das Fahrzeugheck aufgenommener Behälter, beispielsweise ein Container oder eine Mulde, während seines Verschiebens auf dem Wechselgerät mit seinen Vorsprüngen automatisch in die Sicherungsorgane einklinkt, sobald die Transportlage des Behälters erreicht ist. Die Vorsprünge können z.B. an der Behälterunterseite seitlich angebrachte vorstehende Platten, Bolzen oder Ösen sein, die im wesentlichen waagerecht ausgerichtet sind. Mit ihren vorstehenden Bereichen kommen solche Vorsprünge mit der hakenförmigen Greifnase des Sicherungsorgans in Eingriff, so daß der Behälter durch das am Chassis angeordnete Sicherungsorgan gegen Abheben vom Fahrzeug gesichert ist.

Da ein vom Wechselgerät aufgenommener Behälter bei üblichen Wechselgeräten über den Schubrahmen des Wechselgerätes in die Transportlage bewegbar ist, kann die Schiebestellung des Schubrahmens genutzt werden, um den erfindungsgemäß vorgesehenen Endschalter zu betätigen. Demzufolge kann der Endschalter am Chassis angeordnet sein und einen gegen die Bewegungsbahn eines Schubrahmens des Wechselgeräts vorstehenden Nocken aufweisen.

Selbstverständlich kann der Endschalter am Chassis auch derart angeordnet sein, daß er vom Behälter, beispielsweise einem vom Behälter entsprechend vorstehenden Bauteil, wie einer Bodenschiene oder dergleichen, betätigt wird, sobald der Behälter seine Transportlage erreicht hat, bei der sein Vorsprung mit dem entsprechenden Sicherungsorgan am Chassis in Eingriff steht.

Von erfindungswesentlicher Bedeutung ist weiter, daß der Endschalter auch zur Außerbetriebsetzung der Antriebsmittel für den Schubrahmen ohne weiteres genutzt werden kann, da ja der Antrieb des Schubrahmens ebenfalls aussetzen könnte, sobald der Behälter seine Transportlage eingenommen hat, bei der Sicherungsorgan und Vorsprung am Behälter in gegenseitigem Eingriff stehen. Eine derartige Maßnahme des Abschaltens des Schubrahmen-Antriebs über den Endschalter ist jedoch nicht unbedingt notwendig, wogegen die Ausschaltung des Arbeitszylinders der Hubeinrichtung, um ein Ankippen des aufgenommenen Behälters zu vermeiden, notwendig ist.

Der Nocken des Endschalters kann am freien Ende einer am Chassis gelagerten Schaltwippe angeordnet sein, deren dem Nocken abgekehrtes Ende mit dem Betätigungsstößel eines Schaltorgans in Anlage steht. Desweiteren kann auch ein direkter Anschlag des Schubrahmens oder des Behälters am Stößel vorgesehen sein.

Als Schaltorgan ist jedes Bauelement geeignet, welches in der Lage ist, in Abhängigkeit von der Stellung des Endschalters, bzw. der Schaltwippe, den Druckmittelkreislauf für einen Arbeitszylinder so zu beeinflussen, daß der Arbeitszylinder in einer bestimmten Stellung des Schaltorgans nicht mehr arbeitet.

Beispielsweise kann das Schaltorgan ein in eine das Druckmittel zum Ausfahren des Arbeitszylinders führende Druckmittelleitung eingesetztes Wegeventil sein, welches einen Druckanschluß, einen Arbeitsanschluß und einen Ablaufanschluß hat. In der Normalstellung, also dann, wenn das Schaltorgan nicht betätigt ist, weil der Behälter seine Transportlage noch nicht eingenommen hat, ist der Druckanschluß mit dem Arbeitsanschluß verbunden, so daß der Arbeitszylinder betätigt werden kann. Tritt der Endschalter in Funktion, weil der Behälter seine Transportlage eingenommen hat, drückt die Schaltwippe gegen den Betätigungsstößel des Schaltorgans, z.B. des Wegeventils, wodurch der Druckanschluß innerhalb des Wegeventils auf den Ablaufanschluß gelegt wird und dann selbst bei versehentlicher Betätigung der Steuerung des Arbeitszylinders das Druckmittel über den Ablaufanschluß sofort zurück zum Druckmitteltank fließt.

Selbstverständlich kann das Schaltorgan auch ein Steuerventil sein, das mit dem Steuerorgan eines in die Druckmittelleitung zum Arbeitszylinder gesetzten Wegeventils in Wirkverbindung steht. Über das Steuerventil wird dann in Abhängigkeit von der Betätigung seines Stößels entsprechender Steuerdruck auf das Wegeventil gegeben, um dieses so zu beeinflussen, daß der Arbeitszylinder nicht mehr ausfahren kann, sobald der Behälter seine Transportlage eingenommen hat.

Darüber hinaus sind auch elektromagnetische Betätigungen eines Wegeventils denkbar, so daß der Endschalter auch elektrisch arbeiten könnte. Auch pneumatische Steuerungen über den Endschalter sind denkbar.

Sowohl der Endschalter als auch das Sicherungsorgan müssen nicht unbedingt direkt am Chassis angeordnet sein. Es ist von erfindungswesentlicher Bedeutung, daß das Wechselgerät auch über einen Hilfsrahmen am Chassis gehalten sein kann. Der Hilfsrahmen ist Bestandteil des Wechselgerätes und kann fest mit dem Chassis verbunden werden. Der Aufbau eines Wechselgerätes auf dem Chassis eines Fahrzeuges, beispielsweise eines Lastkraftwagens, wird dadurch vereinfacht. Dabei ist dann selbstverständlich auch möglich, Sicherungsorgan und Endschalter der erfindungsgemäßen Transportsicherung statt direkt am Chassis am Hilfsrahmen anzuordnen.

Ein Ausführungsbeispiel, aus dem sich weitere erfinderische Merkmale ergeben, ist in der Zeichnung dargestellt. Es zeigen:
- Fig. 1: eine schematische Ansicht mit teilweise dargestellten Bauteilen des Chassis, des Wechselgeräts und des Behälters, an einer Fahrzeugseite gesehen,
- Fig. 2: eine schematische Seitenansicht des Endschalters in ausgeschalteter Stellung und
- Fig. 3: eine Ansicht des Endschalters in eingeschalteter Stellung.

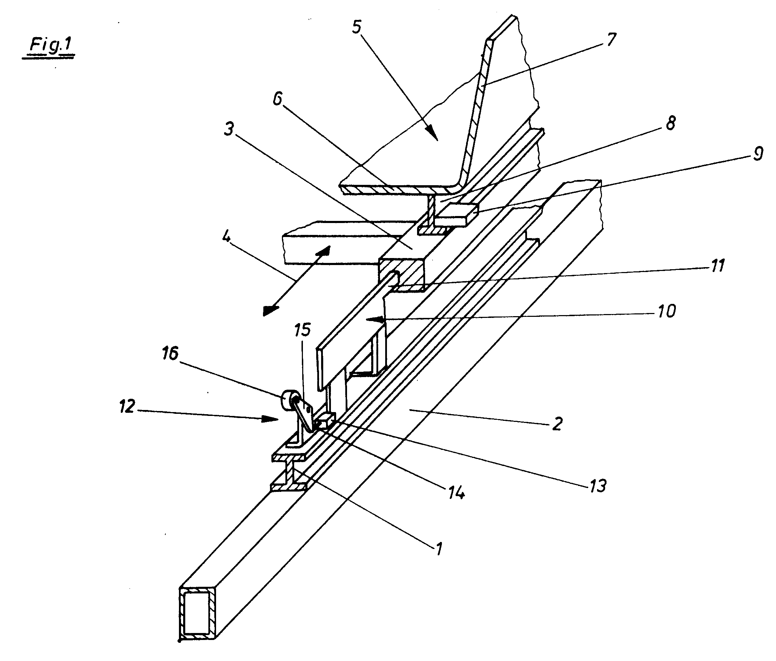

Fig. 1 zeigt eine schematische Ansicht einer Seite eines Fahrzeuges mit Wechselgerät und aufgenommenem Behälter, wobei die Bauteile des Fahrzeugs, des Wechselgeräts und des Behälters nur teilweise dargestellt sind, soweit sie im Bereich der Anordnung der Transportsicherung sichtbar sind.

Bei diesem Ausführungsbeispiel hat das Wechselgerät einen Hilfsrahmen 1, von dem hier lediglich ein Holm sichtbar ist. Der Hilfsrahmen ist mit dem hier durch einen Längsholm verdeutlichten Chassis 2 eines nicht weiter dargestellten Lastkraftwagens verbunden. Ein ebenfalls nicht weiter dargestelltes Wechselgerät hat einen Schubrahmen 3, der durch geeignete Antriebsmittel in Richtung des Doppelpfeiles 4 relativ zum Chassis 2 bewegbar ist. Von diesem Schubrahmen sind hier nur entsprechende Teile seiner Profilträger sichtbar. Ein vom Wechselgerät aufgenommener Behälter 5, von dem hier ebenfalls nur ein Abschnitt seines Bodens 6 sowie seiner Seitenwand 7 dargestellt ist, hat an seiner Unterseite eine Bodenschiene 8. Mit der Bodenschiene liegt der aufgenommene Behälter 5 auf dem Schubrahmen 3 auf. Bei diesem Ausführungsbeispiel ist an der Bodenschiene ein Vorsprung 9 angeordnet, der hier als angeschweißte Lasche ausgebildet ist. Der Vorsprung 9 steht seitlich vor und beschreibt bei Bewegungen des Schubrahmens 3 ebenfalls die durch den Doppelpfeil 4 angegebene Bewegungsbahn. Am Hilfsrahmen 1, und damit am Chassis 2, ist ein nach oben in die Bewegungsbahn des Vorsprungs 9 vorstehendes Sicherungsorgan 10 angeordnet, welches eine Greifnase 11 hat. Die Anordnung ist derart getroffen, daß der Vorsprung 9 am Behälter die Greifnase 11 des Sicherungsorgans 10 untergreifen kann, wenn der Behälter 5 die entsprechende Transportlage eingenommen hat. Der Behälter ist dann gegen ein Abheben vom Chassis 2 gesichert. Die Greifnase 11 und der Vorsprung 9 verhindern ein Anheben des Schubrahmens 3 des Wechselgerätes und damit auch des aufgenommenen Behälters 5.

An dem Hilfsrahmen 1, und damit auch an dem Chassis 2, befindet sich ein Endschalter 12, der aus einem Schaltorgan 13 mit Schaltstößel 14 sowie einer Schaltwippe 15 mit Nocken 16 besteht. Das Schaltorgan 13 ist ein Ventil. Der Nocken 16 steht in die Bewegungsbahn des Schubrahmens 3 vor und kann vom Schubrahmen 3 heruntergedrückt werden, wobei er mit seinem dem Nocken abgekehrten Ende der Schaltwippe den Betätigungsstößel 15 des Schaltorgans 13 betätigt. Die Anordnung ist dabei derart getroffen, daß der Anschlag des Schubrahmens 3 an den Nocken 16 und damit die Betätigung des Schaltorgans erst dann erfolgt, wenn der Behälter 5 seine vorbestimmte Transportlage eingenommen hat, bei welcher der Vorsprung 9 die Greifnase 11 des Sicherungsorgans 10 untergreift. Das Schaltorgan 13 bewirkt in der Transportlage des Behälters 5 ein Abschalten des Arbeitszylinders, beispielsweise des Arbeitszylinders für die Veränderung des Anstellwinkels der Kippbrücke des Wechselgeräts.

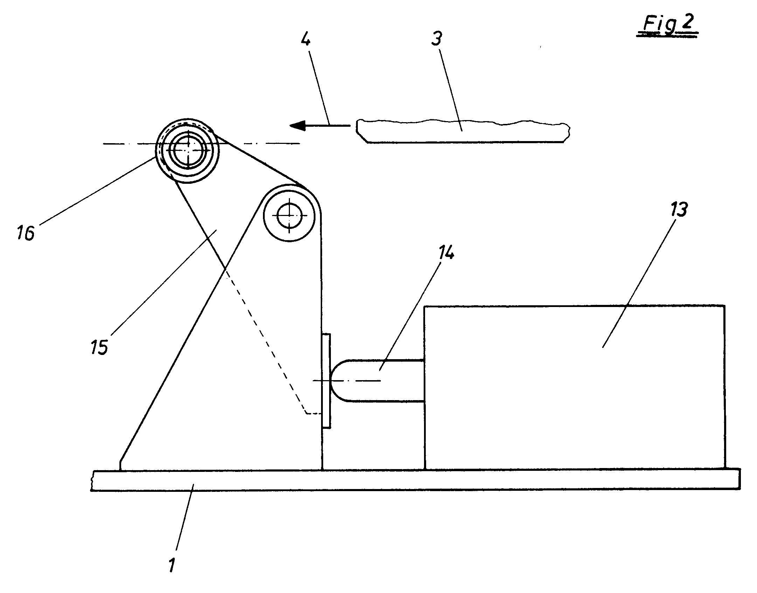

Fig. 2 zeigt in einer schematischen Seitenansicht den Endschalter in einer Stellung, die gegeben ist, bevor der Behälter seine Transportlage eingenommen hat. Gleiche Bauteile sind mit gleichen Bezugszahlen bezeichnet.

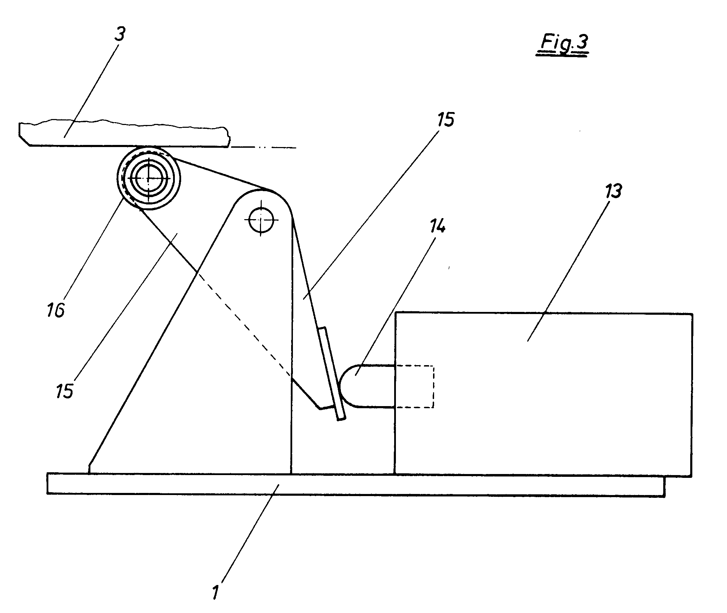

Fig. 3 zeigt den Endschalter in einer Stellung, bei der der Behälter seine Transportlage eingenommen hat. Gleiche Bauteile sind ebenfalls wieder mit gleichen Bezugszahlen bezeichnet.

## Patentansprüche

1. Transportsicherung für einen Behälter (5), der mit einem auf dem Chassis (2) eines Fahrzeugs angeordneten Wechselgerät mit Kippbrücke aufnehmbar und, in Transportlage auf dem Wechselgerät gehalten, transportierbar ist, wobei das Wechselgerät eine von druckmittelbeaufschlagtem Arbeitszylinder betätigbare Hubeinrichtung zur Veränderung des Anstellwinkels der Kippbrücke hat und wobei in der Transportlage des Behälters (5) gegenseitig in Formschlußeingriff stehende Sicherungselemente gegen eine Verschiebung des Behälters (5) aus seiner Transportlage vorgesehen sind,
dadurch gekennzeichnet, daß am Chassis (2) wenigstens ein Sicherungsorgan (10) angeordnet ist,
daß der Behälter (5) wenigstens einen Vorsprung (9) aufweist, daß jeder Vorsprung (9) das zugeordnete Sicherungsorgan (10) in der Transportlage des Behälters (5) formschlüssig untergreift und
daß ein in der Transportlage des Behälters (5) betätigter Endschalter (12) vorgesehen ist, der mit einem den Arbeitszylinder der Hubeinrichtung außer Betrieb setzenden Schaltorgan (13) in Wirkverbindung steht.

2. Transportsicherung nach Anspruch 1, dadurch gekennzeichnet, daß jedes Sicherungsorgan (10) als eine vom Chassis (2) nach oben abstehende und zum Fahrzeugheck hin weisende hakenförmige Greifnase (11) ausgebildet ist.

3. Transportsicherung nach einem der Ansprüche 1 und 2, dadurch gekennzeichnet, daß an jeder Längsseite des Chassis (2) je ein Sicherungsorgan (10) angeordnet ist.

4. Transportsicherung nach einem der vorhergehenden Ansprüche, dadurch gekennzeichnet, daß der Endschalter (12) am Chassis (2) angeordnet ist und einen gegen die Bewegungsbahn (4) eines Schubrahmens (3) des Wechselgerätes vorstehenden Nocken (16) aufweist.

5. Transportsicherung nach Anspruch 4, dadurch gekennzeichnet, daß der Nocken (16) am freien Ende einer am Chassis (2) gelagerten Schaltwippe angeordnet ist, deren dem Nocken (16) abgekehrtes Ende mit einem Betätigungsstößel (14) des Schaltorgans (13) in Anlage steht.

6. Transportsicherung nach einem der vorhergehenden Ansprüche, dadurch gekennzeichnet, daß das Schaltorgan (13) ein in eine das Druckmittel zum Ausfahren des Arbeitszylinders führende Druckmittelleitung eingesetztes Wegeventil mit einem Druckanschluß, einem Arbeitsanschluß und einem Ablaufanschluß ist.

7. Transportsicherung nach einem der Ansprüche 1 bis 5, dadurch gekennzeichnet, daß das Schaltorgan (13) ein Steuerventil ist, das mit dem Steuerelement eines in die Druckmittelleitung zum Arbeitszylinder gesetzten Wegeventils mit Druckanschluß, Arbeitsanschluß und Ablaufschluß in Wirkverbindung steht.

## Claims

1. A transportation securing arrangement for a container (5) which can be lifted up by an exchanging device arranged on the chassis (2) of a vehicle and having a tipping platform, and which is transportable, being held on the exchanging device in the transportation position, wherein the exchanging device comprises a lifting arrangement for changing the setting angle of the tipping platform and actuatable by a working cylinder acted upon by pressure medium, and wherein, in the transportation position of the container (5), securing elements in positive mutual engagement are provided to prevent the container (5) from being displaced out of its transportation position,
characterised in that at least one securing member (10) is arranged on the chassis (2), in that the container (5) has at least one projection (9), in that each projection (9) engages positively below the associated securing member (10) in the transportation position of the container (5), and in that a limit switch (12) is provided which is actuated in the transportation position of the container (5) and which is operatively connected to a switching member (13) stopping the working cylinder of the lifting arrangement.

2. A transportation securing arrangement according to claim 1, characterised in that each securing member (10) is formed as a hook-shaped gripping nose (11) projecting upwards from the chassis (2) and directed towards the tail of the vehicle.

3. A transportation securing arrangement according to either one of claims 1 and 2, characterised in that a securing member (10) is arranged on each longitudinal side of the chassis (2).

4. A transportation securing arrangement according to any one of the preceding claims, characterised in that the limit switch (12) is arranged on the chassis (2) and has a cam (16) projecting towards the path of motion (4) of a sliding frame (3) of the exchanging device.

5. A transportation securing arrangement according to claim 4, characterised in that the cam (16) is arranged on the free end of a switching rocker mounted on the chassis (2), the end of the switching rocker facing away from the cam (16) resting against an actuating cam follower (14) of the switching member (13).

6. A transportation securing arrangement according to any one of the preceding claims, characterised in that the switching member (13) is a directional control valve inserted into a pressure-medium line conveying the pressure medium for extending the working cylinder, the said directional control valve having a pressure connection, an operating connection and a discharge connection.

7. A transportation securing arrangement according to any one of claims 1 to 5, characterised in that the switching member (13) is a control valve which is operatively connected to the control element of a directional control valve inserted into the pressure-medium line to the working cylinder and having a pressure connection, an operating connection and a discharge connection.

## Revendications

1. Fixation de transport pour un conteneur (5), qui peut être repris au moyen d'un dispositif d'échange avec pont basculant, monté sur le châssis (2) d'un véhicule et qui peut être transportè, maintenu en position de transport sur le dispositif d'échange, le dispositif d'échange possédant un dispositif de levage actionné par un vérin alimenté en fluide sous pression, afin de faire varier l'angle d'inclinaison du pont basculant et, en position de transport du conteneur (5), des éléments de blocage, en prise réciproque par concordance de forme, étant prévus contre un déplacement du conteneur (5) à partir de sa position de transport, caractérisée en ce que sur le châssis (2) il est prévu au moins un organe de blocage (10), en ce que le conteneur (5) présente au moins une partie saillante (9), en ce que chaque partie saillante (9) passe, par concordance de forme, sous l'organe de blocage (10) correspondant en position de transport du conteneur (5) et en ce qu'il est prévu un interrupteur de fin de course (12), actionné dans la position de transport du conteneur (5), qui est en liaison active avec un organe de commutation (13) mettant hors service le vérin du dispositif de levage.

2. Fixation de transport selon la revendication 1, caractérisée en ce que chaque organe de blocage (10) est concu à la manière d'un ergot de prise (11) en forme de crochet dépassant vers le haut du châssis (2) et dirigé vers l'arrière du véhicule.

3. Fixation de transport selon l'une des revendications 1 et 2, caractérisée en ce qu'il est prévu une organe de blocage (10) sur chacun des grand cotes du châssis (2).

4. Fixation de transport selon l'une des revendications précédentes, caractérisée en ce que l'interrupteur de fin de course (12) est monté sur le châssis (2) et comporte une came (16) saillante, dirigée vers la trajectoire (4) d'un cadre coulissant (3) du dispositif d'échange.

5. Fixation de transport selon la revendication 4, caractérisée en ce que la came (16) se situe à l'extrémité libre d'une bascule de commutation montée sur le châssis (2), dont l'extrémité tournée à l'opposé de la came (16), s'applique contre un poussoir d'actionnement (14) de l'organe de commutation (13).

6. Fixation de transport selon l'une des revendications précédentes, caractérisée en ce que l'organe de commutation (13) est une vanne de distribution à plusieurs voies, montée dans une conduite de fluide sous pression acheminant le fluide sous pression en vue de l'extraction du vérin avec un raccord de pression, un raccord de travail et un raccord d'évacuation.

7. Fixation de transport selon l'une des revendications 1 à 5, caractérisée en ce que l'organe de commutation (13) est une vanne de comande, qui est en liaison active avec l'élément de commande d'une vanne de distribution à plusieurs voies, montée dans la conduite de fluide sous pression menant au vérin, avec raccord de pression, raccord de travail et raccord d'évacuation.
